# EUROPEAN PATENT APPLICATION

(11) **EP 3 089 488 A1**
(43) Date of publication of application: **02.11.2016**
(21) Application number: 14873203.5
(22) Date of filing: 27.10.2014
(51) Int. Cl.: H04W 4/22, H04W 36/14, H04W 92/20

(54) **MOBILE COMMUNICATION SYSTEM, BASE STATION, AND COMMUNICATION METHOD**

(30) Priority: 27.12.2013 JP 2013271581
(71) Applicant: NEC Corporation, Tokyo 108-8001 (JP)
(72) Inventor: HAYASHI, Sadafuku, Tokyo 108-8001 (JP); SASAKI, Takahiro, Tokyo 108-8001 (JP); YOSHIMURA, Yozo, Tokyo 108-8001 (JP)
(74) Representative: MacDougall, Alan John Shaw
(86) International application number: PCT/JP2014/078452
(87) International publication number: WO 2015/098268

(57) **Abstract**

A mobile communication system according to the present invention includes multiple base stations. The base station receives emergency support information indicating the supporting status of emergency call communication at neighboring base stations adjacent to the base station.

## Description

### Technical Field

The present invention relates to a technology for processing an emergency call in a mobile communication system.

### Background Art

In the mobile communication system, in order to enable stable transmission of emergency calls (e.g., calls to 110 or 119 inside Japan) from an UE (User Equipment: terminal) and in order to give top priority to these emergency calls, it is essential to secure the communication channel. Further, UEs in the mobile communication system are assumed to move (emergency calls are disclosed in Patent Documents 1 and 2).

Accordingly, in the mobile communication system, there occurs a case where a UE that is being engaged in emergency call performs a H/O (Hand Over) across cells of eNBs (evolved Node B: Base station) in order to secure the communication channel.

Now, description will be made on an example where a UE being engaged in emergency call performs H/O.

Suppose that while engaged in emergency call with eNB#1, a UE moves to the cell boundary between the cell of eNB#1 and the neighboring cell of eNB#2 and receives a signal from eNB#2 to be used to recognize that the UE has entered the area where the UE can hand over to eNB#2, the UE then notifies eNB#1 of the fact that the signal has been received while eNB#1 attempts to cause the UE to be handed over to eNB#2.

However, eNB#2 does not always support emergency call communication. For example, when eNB#1 and eNB#2 belong to different PLMNs (Public Land Mobile Network), there are cases where the network operators managing PLMNs may be different from each other. It is therefore thought that, because the supporting status for emergency call communication may be different between the network operators, therefore eNB#2 cannot support emergency call communication.

As a result, even if the UE is handed over to eNB#2, it is impossible to continue emergency call communication if eNB#2 does not support emergency call communication.

### Related Art Documents

### Patent Documents

Patent Document 1: JP2010-526486
Patent Document 2: WO 2013/065824

### Summary of the Invention

### Problems to be solved by the Invention

As stated above, in the radio communication system, a UE that is engaged in emergency call communication cannot continue emergency call communication if the UE is handed over to an eNB that does not support emergency call communication.

In order to prevent this, it is necessary, for example to avoid the eNB handing over the UE that is engaged in emergency call to a neighboring eNB that does not support emergency call.

However, the eNB does not know the supporting status of emergency call communication in the neighboring eNB.

So, it is impossible to prevent the eNB from performing H/O to a neighboring eNB that does not support emergency call communication.

The object of the present invention is to provide a technology for solving the above problem.

### Means for Solving the Problems

The mobile communication system according to the present invention is a mobile communication system comprising: a plurality of base stations, wherein the base station receives emergency call support information indicating the supporting status of emergency call communication at a neighboring base station adjacent to the base station.

The base station of the present invention is a base station in a mobile communication system including: a plurality of base stations, comprising: a communication unit for receiving emergency support information indicating the supporting status of emergency call communication at neighboring base stations adjacent to the base station.

The communication method of the present invention is a communication method of a base station in a mobile communication system including a plurality of base stations, comprising a step of receiving emergency support information indicating the supporting status of emergency call communication at neighboring base stations adjacent to the base station.

### Effect of the Invention

According to the present invention, it is possible to obtain the effect in which the base station can become aware of the supporting status of emergency call communication at a neighboring base station adjacent thereto.

### Brief Description of the Drawings

[FIG. 1] A diagram showing a mobile communication system configuration of the present exemplary embodiment.
[FIG. 2] A sequence diagram that illustrates method 1 for notifying eNB(#1a) 30-1a of the emergency call support information on eNB(#2a) 30-2a, in the mobile communication system of the present exemplary embodiment.
[FIG. 3] A sequence diagram that illustrates method 2 for notifying eNB(#1a) 30-1a of the emergency call support information on eNB(#2a) 30-2a, in the mobile communication system of the present exemplary embodiment.
[FIG. 4] A sequence diagram that illustrates method 3 for notifying eNB(#1a) 30-1a of the emergency call support information on eNB(#2a) 30-2a, in the mobile communication system of the present exemplary embodiment.
[FIG. 5] A sequence diagram that illustrates method 4 for notifying eNB(#1a) 30-1a of the emergency call support information on eNB(#2a) 30-2a, in the mobile communication system of the present exemplary embodiment.
[FIG. 6] A sequence diagram that illustrates method 5 for notifying eNB(#1a) 30-1a of the emergency call support information on eNB(#2a) 30-2a, in the mobile communication system of the present exemplary embodiment.
[FIG. 7] A sequence diagram that illustrates method 6 for notifying eNB(#1a) 30-1a of the emergency call support information on eNB(#2a) 30-2a, in the mobile communication system of the present exemplary embodiment.
[FIG. 8] A sequence diagram that illustrates the operation of UE 20 that is engaged in emergency call communication at the time of H/O, in the mobile communication system of the present exemplary embodiment.
[FIG. 9] A diagram showing an overall configuration of a base station of the present invention. Mode for Carrying Out the Invention

Next, the mode for carrying out the present invention will be described with reference to the drawings.

### (1) The Present Exemplary Embodiment

### (1-1) The Configuration of the Present Exemplary Embodiment

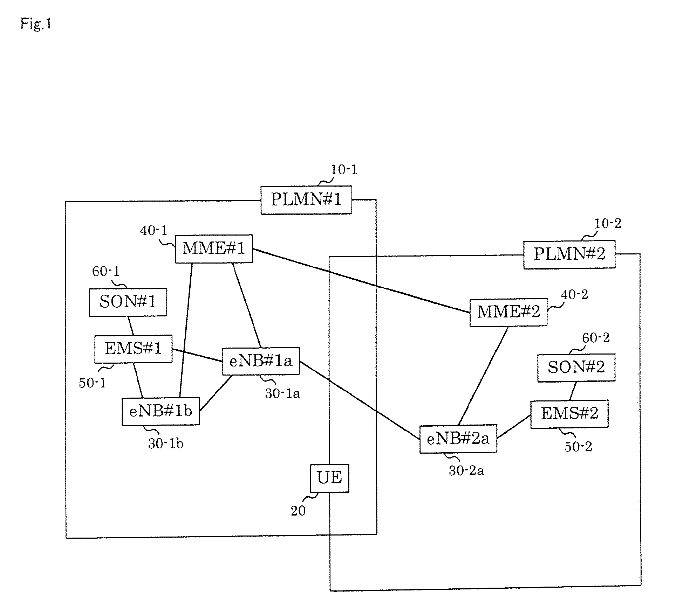

FIG. 1 shows a diagram of a configuration of a mobile communication system of one exemplary embodiment.

As shown in FIG. 1, the mobile communication system of the present exemplary embodiment is an example applied to an LTE (Long Term Evolution) mobile communication system.

PLMN(#1) 10-1 and PLMN(#2) 10-2 are sharing a network. In the description hereinbelow, PLMN(#1) 10-1 and PLMN(#2) 10-2 are not distinguished one from another, they are simply named PLMN 10.

eNB(#1a) 30-1a, eNB(#1b) 30-1b, MME (Mobility Management Entity) (#1) 40-1, EMS (Element Management System) (#1) 50-1 and SON (Self Organizing Network) (#1) 60-1 are provided under the control of PLMN(#1) 10-1.

eNB(#2a) 30-2a, MME(#2) 40-2, EMS(#2) 50-2 and SON(#2) 60-2 are provided under the control of PLMN(#2) 10-2.

UE 20 is a terminal that is capable of performing radio communication with any of eNB(#1a) 30-1a, eNB(#1b) 30-1b and eNB(#2a) 30-2 while moving between the area of PLMN(#1) 10-1 and the area of PLMN(#2) 10-2.

eNB(#1a) 30-1a, eNB(#1b) 30-1b and eNB(#2a) 30-2a are nodes that perform radio communication with UE 20 and are examples of base stations. In the following description, when eNB(#1a) 30-1a, eNB(#1b) 30-1b and eNB(#2a) 30-2a are not distinguished one from another, they are simply called eNB 30.

MME(#1) 40-1 and MME(#2) 40-2 are nodes that manage movement of UE 20, and are examples of a mobility management device. In the following description, when MME(#1) 40-1 and MME(#2) 40-2 are not distinguished one from another, they are simply called MME 40.

EMS(#1) 50-1 and EMS(#2) 50-2 are nodes that perform operation/maintenance of the mobile communication system and are examples of an operation and maintenance device (O&M (Operation and Maintenance) device). In the following description, when EMS(#1) 50-1 and EMS(#2) 50-2 are not distinguished one from another, they are simply called EMS 50.

SON(#1) 60-1 and SON(#2) 60-2 include nodes that control neighboring cell information of each eNB 30. In the following description, when SON(#1) 60-1 and SON(#2) 60-2 are not distinguished one from another, they are simply called SON 60.

Though SON 60 is provided for each of PLMN(#1)10-1 and PLMN(#2) 10-2, SON 60 may be provided to cover both PLMN(#1) 10-1 and PLMN(#2) 10-2.

Further, SON 60 is connected to eNB 30 via EMS 50, but may be connected directly to eNB 30.

### (1-2) The Operation of the Present Exemplary Embodiment

The operation of the mobile communication system of the present exemplary embodiment will be described.

### (1-2-1) Notice Operation of Emergency Call Support Information

In the mobile communication system, when UE 20 that is engaged in emergency call communication performs H/O to eNB 30 that does not support emergency call communication, the UE cannot continue emergency call communication.

In order to prevent this, eNB 30 needs to prevent UE 20 that is engaged in emergency call communication from performing H/O to neighboring eNB 30 that does not support emergency call communication.

For this purpose, eNB 30 needs to become aware of the supporting status of emergency call communication at neighboring eNBs 30 adjacent thereto.

To achieve this, in this exemplary embodiment, emergency call support information showing the supporting status of emergency call communication (whether or not emergency call communication is supported) at neighboring eNBs 30 adjacent to eNB 30 is adapted so that it can be notified to that eNB 30.

For example, eNB(#1a) 30-1a is notified about emergency call support information concerning eNB(#1b) 30-1b and eNB(#2a) 30-2a that are located adjacent to eNB(#1a) 30-1a.

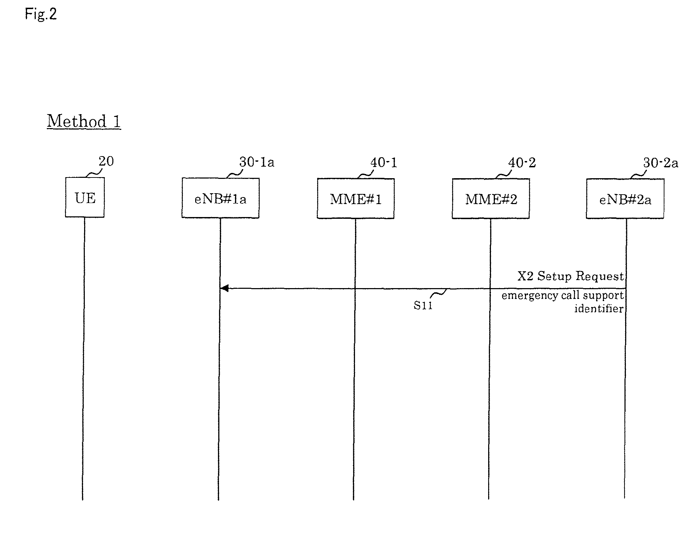

Next, methods for notifying eNB(#1a) 30-1a of the emergency call support information on eNB(#2a) 30-2a will be described. In the following description with FIGS. 2 to 7, emergency call support information is assumed to use an emergency call support identifier that is an identifier showing whether or not emergency call communication is supported.

### (1-2-1-1) Method 1

FIG. 2 shows a sequence diagram for illustrating method 1.

As shown in FIG. 2, method 1 is a method in which eNB(#2a) 30-2a directly transmits an emergency call support identifier to eNB(#1a) 30-1a by using the X2 interface.

Specifically, eNB(#2a) 30-2a inserts the emergency call support identifier of eNB(#2a) 30-2a into an X2 Setup request message and transmits the X2 Setup request message to eNB(#1a) 30-1a, for example at the time of boot-up thereof (Step S11).

Here, the time when eNB 30 transmits the X2 Setup request message including the emergency call support identifier is not limited to the time of boot-up.

Alternatively, eNB 30 may use reception of an X2 Setup request message from a neighboring eNB 30 to insert the emergency call support identifier into an X2 Setup request message and to transmit the message to the neighboring eNB.

### (1-2-1-2) Method 2

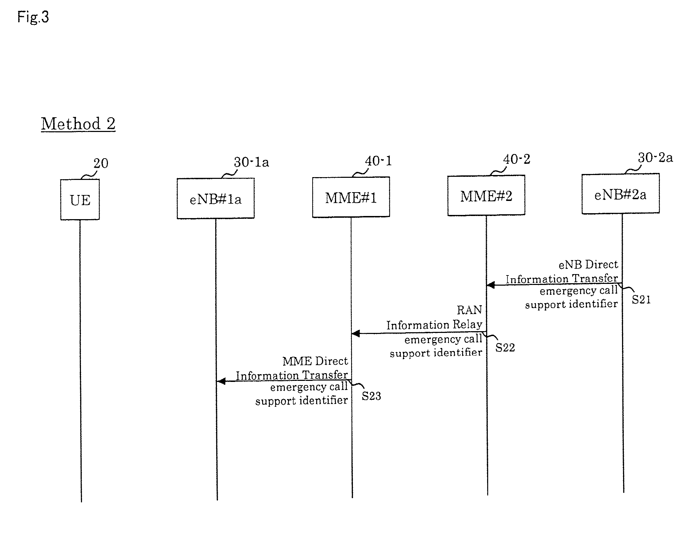

FIG. 3 shows a sequence diagram for illustrating method 2.

As shown in FIG. 3, method 2 is a method in which eNB(#2a) 30-2a transmits an emergency call support identifier to eNB(#1a) 30-1a via MME(#2) 40-2 and MME(#1) 40-1.

Specifically, eNB(#2a) 30-2a, for example at the time of boot-up, inserts the emergency call support identifier of eNB(#2a) 30-2a into an eNB Direct Information Transfer message and transmits the eNB Direct Information Transfer message to MME(#2) 40-2 (Step S21).

Next, MME(#2) 40-2 inserts the emergency call support identifier included in the eNB Direct Information Transfer message, into a RAN Information Relay message, and transmits the RAN Information Relay message to MME(#1) 40-1 (Step S22).

Next, MME(#1) 40-1 inserts the emergency call support identifier included in the RAN Information Relay message, into an MME Direct Information Transfer message and transmits the MME Direct Information Transfer message to eNB(#1a) 30-1a (Step S23).

Here, the time when eNB 30 transmits the X2 Setup request message including the emergency call support identifier is not limited to the time of boot-up.

### (1-2-1-3) Method 3

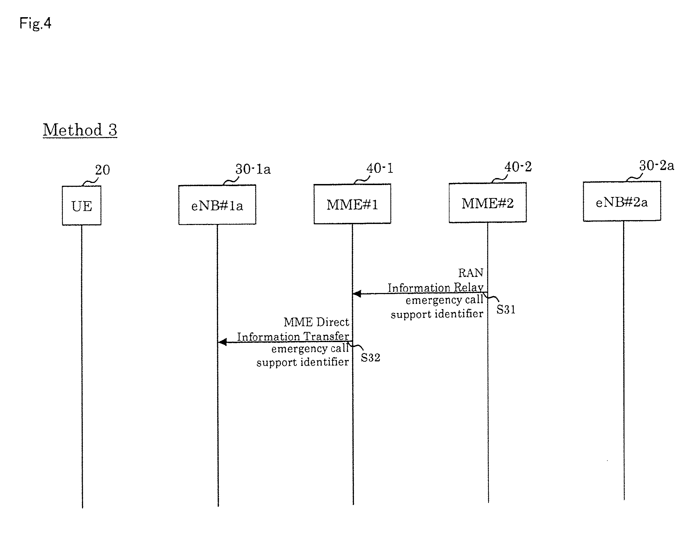

FIG. 4 shows a sequence diagram for illustrating method 3.

As shown FIG. 4, method 3 is a method in which MME(#2) 40-2 transmits an emergency call support identifier of eNB(#2a) 30-2a under the control thereof to eNB(#1a) 30-1a.

Specifically, MME(#2) 40-2 recognizes the supporting status of emergency call communication at each eNB 30 (including eNB(#2a) 30-2a) under the control thereof.

Accordingly, MME(#2) 40-2 inserts the emergency call support identifiers of every eNB 30 under the control thereof, into a RAN Information Relay message, and transmits the RAN Information Relay message to MME(#1) 40-1 (Step S31).

Next, MME(#1) 40-1 inserts the emergency call support identifiers of every eNB 30 under the control of MME(#2)40-2, included in the RAN Information Relay message, into an MME Direct Information Transfer message and transmits the MME Direct Information Transfer message to eNB(#1a) 30-1a (Step S32).

Here, as regards the emergency call support identifiers transmitted from MME(#2)40-2 to eNB(#1a) 30-1a via MME(#1)40-1, the emergency call support identifiers of the eNBs 30 adjacent to only eNB(#1a) 30-1a, from among the eNBs 30 under the control of MME(#2)40-2, may be transmitted.

### (1-2-1-4) Method 4

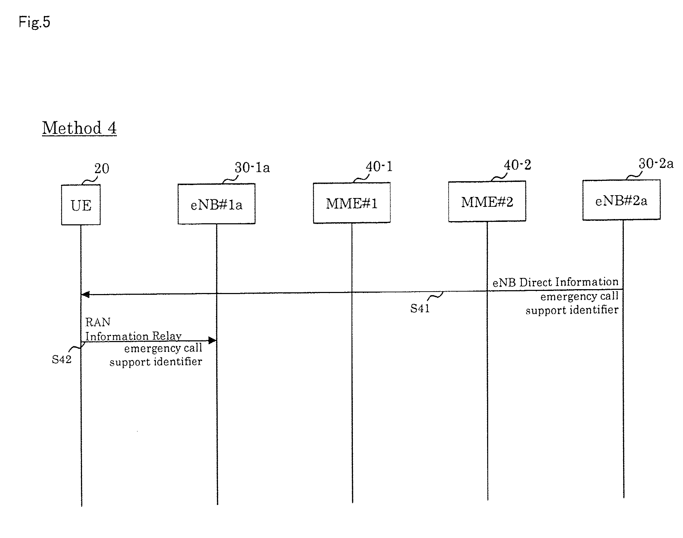

FIG. 5 shows a sequence diagram to illustrate method 4.

As shown FIG. 5, method 4 is a method in which eNB(#2a) 30-2a broadcasts its emergency call support identifier by radio while eNB(#1a) 30-1a comes to recognize of the emergency call support identifier of eNB(#2a) 30-2a through the report from UE 20.

Specifically, eNB(#2a) 30-2a inserts the emergency call support identifier of eNB(#2a) 30-2a into an eNB Direct Information message, and broadcasts the eNB Direct Information message by radio (Step S41).

When receiving the eNB Direct Information message, UE 20 inserts the emergency call support identifier included in the eNB Direct Information message into a RAN Information Relay message, and transmits the RAN Information Relay message to eNB(#1a) 30-1a that is engaged in radio communication.

### (1-2-1-5) Method 5

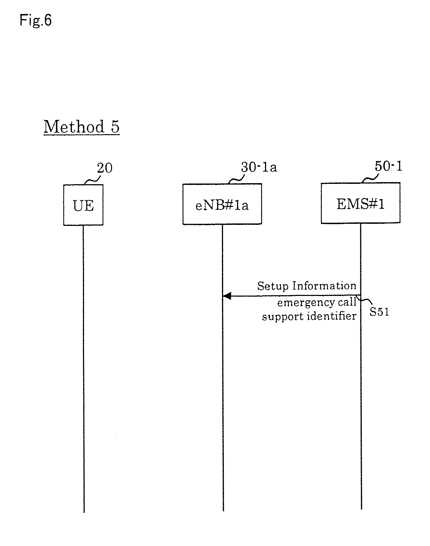

FIG. 6 shows a sequence diagram for illustrating method 5.

As shown in FIG. 6, method 5 is a method in which EMS(#1) 50-1 transmits the emergency call support identifier of eNB(#2a) 30-2a to eNB(#1a) 30-1a.

Specifically, EMS(#1) 50-1 has acquired emergency call support identifiers of every eNB 30 (including eNB(#2a) 30-2a) under the control of MME(#2) 40-2, from MME(#2) 40-2.

Accordingly, EMS(#1) 50-1 inserts the emergency call support identifiers of every eNB 30 under the control of MME(#2) 40-2, into a Setup Information message, and transmits the Setup Information message to eNB(#1a) 30-1a (Step S51).

Here, as regards the emergency call support identifiers transmitted from EMS(#1) 50-1 to eNB(#1a) 30-1a, the emergency call support identifiers of the eNBs 30 adjacent to only eNB(#1a) 30-1a, from among the eNB 30 under the control of MME(#2)40-2, may be transmitted.

### (1-2-1-6) Method 6

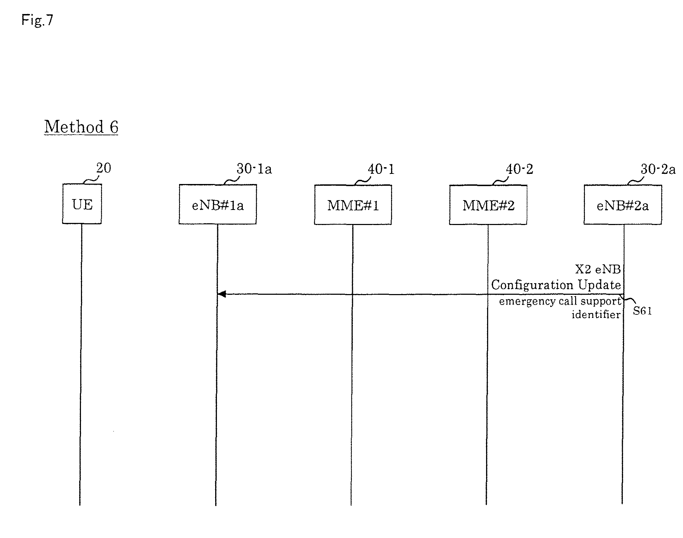

FIG. 7 shows a sequence diagram for illustrating method 6.

As shown in FIG. 7, method 6 is a method in which, when modifying its supporting status of emergency call communication in the middle of operation, eNB(#2a) 30-2a directly transmits a modified emergency call support identifier to eNB(#1a) 30-1a by using the X2 interface.

Specifically, when modifying its supporting status of emergency call communication in the middle of operation (upon a change from the unsupporting status to the supporting status or from the supporting status to the unsupporting status), eNB(#2a) 30-2a inserts the emergency call support identifier indicating the modified emergency call supporting status thereof into an X2 eNB Configuration Update message, and transmits the X2 eNB Configuration Update message to eNB(#1a) 30-1a (Step S61).

It should be noted that the method of notifying eNB(#1a) 30-1a of the emergency call supporting information on eNB(#1b) 30-1b can be achieved by any one of the above methods (FIGS. 2 to 7) or by combination of any of two or more.

It should be noted that when method 2 (FIG. 3) is used, Step S22 can be omitted since the eNB Direct Information Transfer message is transmitted from eNB(#1b) 30-1b to MME(#1) 40-1 at Step S21. Also, when method 3 (FIG. 4) is used, Step S31 can be omitted since MME(#1) 40-1 recognizes the supporting status of emergency call communication at eNB(#1b) 30-1b.

Since use of the above methods 1 to 6 (FIGS. 2 to 7) enables eNB(#1a) 30-1a to acquire the knowledge of emergency call support information at neighboring eNB(#1b) 30-1b and eNB(#2a) 30-2a of eNB(#1a) 30-1a, eNB(#1a) 30-1a records the emergency call support information in a neighboring cell list therein.

The neighboring cell list is a list recorded with cell information on the cells of neighboring eNBs 30 adjacent to its own eNB 30.

For example, as shown in Table 1, the neighboring cell list is recorded with a cell identifier, supporting status of emergency call communication, H/O feasibility, etc. as the cell information on each neighboring cell. Here, for example, H/O feasibility is recorded with "H/O unfeasible" for an eNB 30 that is out of order. H/O feasibility information is notified from SON 60.

**[Table 1]**

| Cell Identifier | Emergency Call Communication Supporting status | H/O Feasibility |
|---|---|---|
| 1 | ○ | ○ |
| 2 | × | × |
| 3 | ○ | ○ |
| 4 | × | × |

As described above, eNB 30 can recognize the supporting status of emergency call communication at neighboring eNBs 30 adjacent thereto.

Accordingly, eNB 30 can prevent UE 20 that is engaged in emergency call communication from performing H/O to a neighboring eNB 30 that does not support emergency call communication, as will be described below.

As a result, UE20 can continue emergency call communication after H/O, hence there is no risk that the network quality and reliability of the mobile communication system will be impaired.

Next, the operation of UE 20 at the time of H/O will be described.

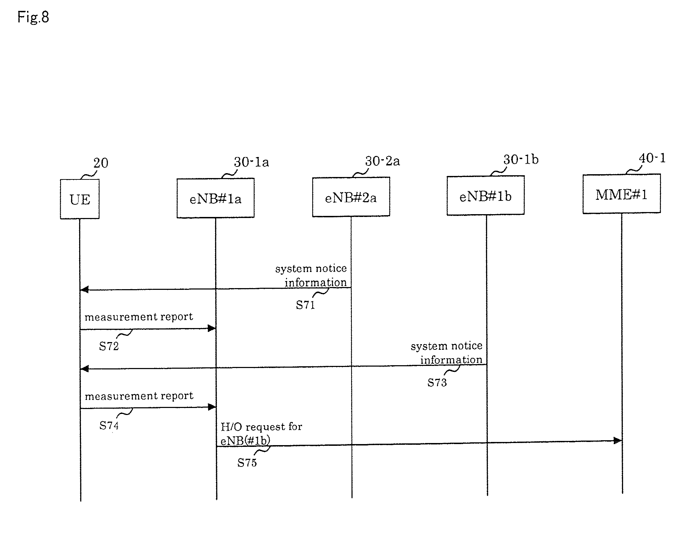

FIG. 8 is a sequence diagram that illustrates the operation of UE 20 at the time of H/O.

Here, the sequence diagram in FIG. 8 is a simple version based on the 3GPP (Third Generation Partnership Project) standards.

In reference to emergency calls in eNB 30, the following terms in TS23.401 are used.

"emergency bearer service" and "E-RAB with a Particular ARP value".

### (ARP is Allocation/Retention Priority. In TS36.413 for eNBs and TS25.413 for RNCs, this ARP is especially used to refer to Emergency Bearer Service.)

It is assumed in FIG. 8 that UE 20 while engaged in emergency call communication with eNB(#1a) 30-1a under the control of PLMN(#1) 10-1 moves from the area of PLMN(#1) 10-1 to the area of PLMN(#2) 10-2 that shares a network with PLMN(#1) 10-1 and is trying to perform H/O.

It is also assumed that eNB(#1a) 30-1a, eNB(#1b) 30-1b and eNB(#2a) 30-2a have received emergency call support information on neighboring eNBs 30 adjacent to its own eNB, in the same way as in the above methods 1-6 (FIGS. 2 to 7) and has recorded the information in the neighboring cell list.

As shown in FIG. 8, eNB(#2a) 30-2a under the control of PLMN(#2)10-2 notifies system notice information. It is assumed that UE 20 having moved to the area of PLMN(#2)10-2 has received the system notice information from eNB(#2a) 30-2a (Step S71).

Then, UE 20 receives a signal that indicates that the UE has entered the area where H/O to eNB(#2a) 30-2a is allowed, from the system notice information of eNB(#2a) 30-2a. This signal is a signal that is defined in 3GPP standards.

UE 20 then transmits a measurement report to eNB(#1a) 30-1a that is engaged in emergency call communication with the UE, and provides notification that the UE is residing in the area where H/O to eNB(#2a) 30-2a is allowed (Step S72).

On the other hand, eNB(#1b) 30-1b under the control of PLMN(#1)10-1 also provides system notice information, and it is assumed that UE 20 has also received this system notice information (Step S73).

Then, UE 20 similarly transmits a measurement report to eNB(#1a) 30-1a that is engaged in emergency call communication with the UE, and provides notification that the UE is residing in the area where H/O to eNB(#1b) 30-1b is also allowed (Step S74).

At this stage, eNB(#1a) 30-1a has already received the emergency call support information on eNB(#2a) 30-2a and eNB(#1b) 30-1b in the same way as in the above methods 1 to 6 and has recorded the information in the neighboring cell list. However, if eNB(#1a) 30-1a has not received the emergency call support information on eNB(#2a) 30-2a and/or eNB(#1b) 30-1b, eNB(#1a) 30-1a may obtain emergency call support information by asking neighboring eNBs 30 about emergency call support information by using the measurement report received from UE 20 as a trigger.

In this case, it is assumed that eNB(#2a) 30-2a does not support emergency call communication whereas eNB(#1b) 30-1b supports emergency call communication.

On the other hand, eNB(#1a) 30-1a recognizes from the measurement report from UE 20 that UE 20 is residing in the area where the UE can be handed over to eNB(#2a) 30-2a and eNB(#1b) 30-1b. Further, UE 20 is engaged in emergency call communication.

Under these circumstances, eNB(#1a) 30-1a determines that eNB(#1b) 30-1b is supporting emergency call communication as the H/O destination of UE 20 and transmits a H/O request for eNB(#1b) 30-1b to MME(#1) 40-1 (Step S75).

Though the above example shows a case where UE 20 receives system notice information, there is a case where system notice information is not received, but this example is not shown. For example, UE 20 can receive information equivalent to the system notice information on eNB(#2a) 30-2a, with whom eNB(#1a) 30-1a is in communication. As a result, UE-20 can transmit a measurement report to eNB(#1a) 30-1a, with whom it is in communication, without receiving system notice information about neighboring eNB(#2a) 30-2a. For example, UE 20 obtains information on the frequency and the like that eNB(#2a) 30-2a uses (information equivalent to the system notice information at S71 in FIG. 8) from eNB(#1a) 30-1a and can measure, based on information such as the frequency and the like, the power level of the frequency used by eNB(#2a) 30-2a, and transmits the measurement report to eNB(#1a) 30-1a.

The essential part of the invention is to provide notification of emergency call support information about eNB(#2a) 30-2a and enB(#1b) 30-1b to eNB(#1a) 30-1a in the same way as indicated in aforementioned methods 1 to 6 (FIGS. 2 to 7). In particular, even though neighboring eNB(#2a) 30-2a is a node that is under the control of a network-shared, different PLMN 10, viewed from eNB(#1a) 30-1a, eNB(#2a) 30-2a can obtain knowledge of the emergency call support information beforehand.

Thereby, eNB(#1a) 30-1a can record the emergency call support information on neighboring eNB(#2a) 30-2a and eNB(#1b) 30-1b in the neighboring cell list in advance, so that it is possible to determine whether neighboring eNB(#2a) 30-2a and eNB(#1b) 30-1b are appropriate as the H/O destination of eNB 30. As a result, it is possible for UE 20 to continue emergency call communication without experiencing any problems after H/O.

### (2) Another Exemplary Embodiment

Although the present invention has been explained with reference to the exemplary embodiment, the present invention should not be limited to the above exemplary embodiment. Various modifications that can be understood by those skilled in the art may be made to the structures and details of the present invention within the scope of the present invention. Hereinbelow, variational examples will be shown.

### (2-1) For example, the above exemplary embodiment is described such that eNB 30 receives emergency call support information from neighboring eNBs 30, MME 40 and UE 20, and records the information into the neighboring list in the eNB 30.

On the other hand, a node inside SON 60 manages neighboring cell information of every eNB 30 in order to preform effective network operation. The neighboring cell information includes a neighboring cell list recorded with emergency call support information as shown in Table 1, as the neighboring cell list of every eNB 30. Further, the node inside SON 60 not only manages the neighboring cell information of every eNB 30 under the control of PLMN 10 to which SON 60 itself belongs, but also manages the neighboring cell information of each eNB 30 under the control of another PLMN with which the PLMN 10 performs network sharing.

Accordingly, the node inside SON 60 may provide neighboring cell information to each eNB 30.

Now, as an example in which a node inside SON 60 provides neighboring cell information to each eNB 30, use of ANR (Automatic Neighbor Relation) will be exemplified.

First, UE 20 notifies eNB 30 of cell information that is not contained in the neighboring cell list of eNB 30.

Next, eNB 30 notifies the cell information reported from UE 20 to the nodes inside SON 60.

Next, the node inside SON 60 determines whether or not the cell whose cell information has been reported from eNB 30 should be managed as a neighboring cell adjacent to the cell of the eNB 30.

When the node inside SON 60 has determined that the reported cell should be managed as a neighboring cell, the node reports the cell information of the cell (cell identifier, emergency call communication supporting status, H/O feasibility and the like) to eNB 30.

Then, eNB 30 records the cell information reported from the node inside SON 60, in the neighboring cell list.

### (2-2) The above exemplary embodiment is also described such that H/O source eNB 30 determines H/O target eNB 30.

On the hand, the node inside SON 60 manages neighboring cell information including the neighboring cell list of every eNB 30, as stated above.

Accordingly, the node inside SON 60 may determine the H/O target eNB 30.

The configuration in which the node inside SON 60 determines the H/O target eNB 30 is advantageous because of being able to determine H/O target eNB 30 quickly compared to the configuration in which the H/O source eNB 30 determines H/O target eNB 30.
(2-3) Further, the present exemplary embodiment is described such that eNBs 30 exchange only emergency call support information with each other. However, eNBs may exchange neighboring cell lists containing emergency call support information. In this case, in order to provide emergency call support information notification regarding itself, eNB 30 needs to be placed into the neighboring cell list.
(2-4) The present exemplary embodiment is described such that H/O source eNB 30 determines the H/O target eNB 30 by referring to the neighboring cell list thereinside. However, the H/O source eNB 30 may determine the H/O target eNB 30 by referring to the neighboring cell list held in a node inside SON 60.
(2-5) It is assumed in the above method 1, 2, 4 and 6 (FIGS. 2, 3, 5 and 7) that eNB 30 recognizes its own supporting status of emergency call communication. However, eNB 30 does not always recognize its own supporting status.

Therefore, eNB 30 may ask MME 40 about its own supporting status of emergency call communication.

As inquiry methods, use of S1 setup request message or eNB configuration request message may be mentioned. Further, as a method for responding to the inquiry, methods that use a S1 setup response message or an eNB configuration response message may be mentioned. (2-6) Further, in the above exemplary embodiment, in some case eNB 30 transmits its own emergency call support information, and, in other cases, MME40 transmits emergency call support information for every eNB30 that it controls, that is, notification of the supporting status of emergency call communication is provided on an individual basis for each eNM 30.

However, it is possible to consider cases where eNBs 30 under the control of the same PLMN 10 are set with the same supporting status of emergency call communication.

In such a case, the supporting status of emergency call communication in PLMN 10 (i.e., the supporting status of emergency call communication for all the eNBs 30 under the control of PLMN 10) may be notified to eNBs 30.

Therefore, eNB 30 may be configured to forcibly hand over UE 20 to a neighboring eNB 30 using a switch to the unsupporting status as a trigger.
(2-8) Further, the above exemplary embodiment was described on the assumption that UE 20 is engaged in emergency call communication. The eNB 30 may hand over UEs 20 that are engaged in communication, except for emergency call communication, to eNBs 30 that are not supporting emergency call communication. However, eNB 30 should hand over, at least UEs 20 that are engaged in emergency call communication, to eNBs 30 that are supporting emergency call communication.
(2-9) Moreover, the above exemplary embodiment has been described such that UE 20 is assumed to receive system notice information from eNB 30 and to receive a signal that is used to indicate that the UE has moved to the area where the UE can be handed over to the eNB 30, based on the system notice information. However, UE 20 may be configured to detect the above signal or to measure the quality of the above signal, prior to reception of system notice information.

### (3) Outline of the Invention

In the last, the outline of the invention will be described.

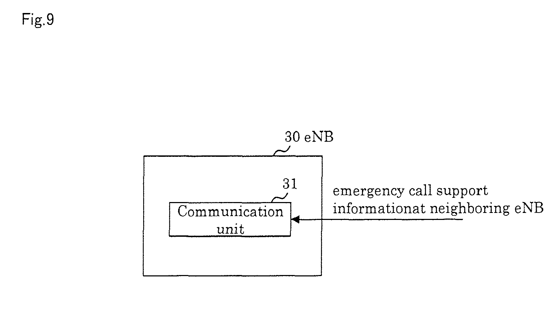

FIG. 9 is a diagram showing the overall configuration of eNB 30 that is to be the key feature of the invention.

As shown in FIG. 9, eNB 30 has communication unit 31. Communication unit 31 receives emergency call support information indicating the supporting status of emergency call communication at neighboring eNBs 30 adjacent to its own eNB 30.

The method of receiving emergency call support information at neighboring eNBs 30 may use the above-described methods 1 to 6 (FIGS. 2 to 7).

Thus, eNB 30 can acquire the knowledge of the supporting status of emergency call communication at neighboring eNBs 30 adjacent thereto.

Here, communication unit 31 is a part that communicates with other nodes and transmits emergency call support information of its own eNB 30 to neighboring eNBs 30 when the above-described methods 1, 2, 4 and 6 (FIGS. 2, 3, 5 and 7) are used.

Also, eNB 30 further includes a storage for storing various pieces of information, other than communication unit 31. This storage stores, for example a neighboring cell list as the list of cells of neighboring eNBs 30 adjacent to its own eNB 30.

Also, eNB 30 includes a control unit for performing various processes. This control unit performs, for example a process of inserting emergency call support information into a message, a process of determining a H/O target eNB 30 when its own eNB 30 is the H/O source, and other processes.

Similarly to eNB 30, it is assumed that other nodes except for eNB 30 (UE 20, MME 40, EMS 50, nodes inside SON 60) also include a communication unit for performing communication with other nodes, a storage for storing various pieces of information and a control unit for performing a process of inserting emergency call support information into a message and other processes.

Here, the communication unit (communicator) includes a transmission unit (transmitter) and a reception unit (receiver), and is configured such that, for example the transmission unit (transmitter) transmits the aforementioned emergency call support information while the reception unit (receiver) receives the aforementioned emergency call support information.

### Industrial Applicability

The present invention can be applied to mobile communications for terminals that are equipped in mobile vehicles such as automobiles, ships, airplanes.

This application claims priority based on Japanese Patent Application 2013-271581 filed on December 27, 2013, and should incorporate all the disclosure thereof herein.

## Claims

1. A mobile communication system comprising: a plurality of base stations, wherein the base station receives emergency call support information indicating the supporting status of emergency call communication at a neighboring base station adjacent to the base station.

2. The mobile communication system according to Claim 1, wherein the base station inserts the emergency call support information on the base station into a message and transmits the message to neighboring base stations adjacent to the base station.

3. The mobile communication system according to Claim 1, further comprising a mobility management device having the base station under the control thereof, wherein the base station inserts the emergency call support information on the base station into a message and transmits the message to neighboring base stations adjacent to the base station via the mobility management device.

4. The mobile communication system according to Claim 1, further comprising a mobility management device having the base station under the control thereof, wherein the mobility management device inserts the emergency call support information on the base station under the control thereof into a message and transmits the message to neighboring base stations adjacent to the base station.

5. The mobile communication system according to Claim 1, further comprising a terminal performing radio communication with the base station, wherein
the base station inserts the emergency call support information on the base station into a first message and broadcasts the first message by radio, and,
the terminal, when receiving the first message, inserts the emergency call support information included in the first message, into a second message and transmits the second message to the base station with which the terminal is radio communicating.

6. The mobile communication system according to Claim 1, further comprising an operation and maintenance device for performing operation/maintenance of the mobile communication system, wherein the operation and maintenance device inserts the emergency call support information on the base station into a message and transmits the message to neighboring base stations adjacent to the base station.

7. The mobile communication system according to Claim 1, wherein when the supporting status of emergency call communication at the base station is modified, the base station inserts the emergency call support information indicating the supporting status after modification into a message and transmits the message to neighboring base stations adjacent to the base station.

8. A base station in a mobile communication system including: a plurality of base stations, comprising:
a communication unit which receives emergency support information indicating the supporting status of emergency call communication at neighboring base stations adjacent to the base station.

9. A communication method of a base station in a mobile communication system including a plurality of base stations, comprising a step of receiving emergency support information indicating the supporting status of emergency call communication at neighboring base stations adjacent to the base station.
